# EUROPEAN PATENT APPLICATION

(11) **EP 1 518 461 A2**
(43) Date of publication of application: **30.03.2005**
(21) Application number: 04010752.6
(22) Date of filing: 06.05.2004
(51) Int. Cl.: A22C 15/00

(54) **Apparatus and method for transferring objects**

(30) Priority: 06.05.2003 IT MO20030128
(71) Applicant: VE.MA.C. S.R.L., 41051 Castelnuovo Rangone (Modena) (IT)
(72) Inventor: Constantini, Maurizio, 41057 Spilamberto (MO) (IT); Vezzali, Franco, 41057 Spilamberto (MO) (IT); Malagoli, Uliano, 41041 Formigine (MO) (IT)
(74) Representative: Luppi, Luigi

(57) **Abstract**

An apparatus for transferring objects (2) comprises hook means (3) suitable for receiving loop means (4) with which said objects are provided (2), moving means (7) arranged to move said hook means in an advancing direction (F, F1) and supporting means (6) provided with further hook means (5) shaped in such a way as to interact with said loop means (4) to pick up said objects (2) from said hook means (3) and deliver them to said supporting means (6); a method for transferring objects (2) comprises associating loop means (4) to said objects (2), hanging said loop means (4) with hook means (3) and moving said hook means (3) in an advancing direction (F, F1).

## Description

This invention concerns an apparatus and a method for transferring objects, in particular food products such as salami, between a tying station, a conveying device and elongated supporting elements whereupon the salami are hung to promote their handling and/or storage.

In the prior art, systems for the production of sausages are known that are provided with sausage-filling apparatuses downstream whereof tying stations of the sausages are arranged.

In such tying stations each sausage is associated with a loop-shaped or eyelet-shaped element, by means of which the sausage can be hung on elongated supporting elements to enable its transfer and/or storage.

The tying stations are equipped with belt conveyors whereupon the sausages are placed during handling.

The belt conveyors transfer the sausages towards loading machines, in which the sausages are associated with the elongated supporting elements, each one of the elongated supporting elements having the shape of a rod.

A machine of the above type is disclosed in European Patent Application 99103419.0.

This patent application, in fact, refers to a machine provided with transfer means shaped in such a way as to interact with the loop-shaped elements of the sausages to receive the sausages on intermediate supporting means and subsequently deliver them to the above-mentioned elongated supporting elements.

A drawback of the disclosed machine is that during operation the constant presence of at least one operator is required to pick up the sausages from the belt conveyor and to insert the loop-shaped elements with which they are provided onto the intermediate supporting means. For this purpose, the intermediate supporting means can be provided with appendages arranged to facilitate reception of the loop-shaped elements.

The intermediate supporting means is movable between a bottom loading position, in which the operator places thereupon the loop-shaped elements of the sausages, and a top delivery position, in which the intermediate supporting means delivers the sausages to the elongated supporting elements.

The machine furthermore comprises a handling device arranged to transfer the intermediate supporting means between the bottom loading position and the top delivery position.

The handling device is equipped with a rotating body from which first intermediate supporting means and second intermediate supporting means of the intermediate supporting means lead away.

The handling device furthermore comprises guide means arranged to vary the relative position of the first intermediate supporting means and of the second intermediate supporting means in such a way as to make the sausages perform a substantially straight stroke to limit oscillations of the sausages during transfer between the bottom loading position and the top delivery position.

The need to provide the handling device involves that the overall dimensions of the machine are considerable.

These overall dimensions are quite great inasmuch as during loading and unloading of the sausages the first intermediate supporting means and second intermediate supporting means must be separated by a distance such as to enable the operator to interact with the machine.

One object of the present invention is to improve the systems for transferring objects.

A further object is to increase the efficiency of the apparatuses for transferring objects by limiting the number of operators required during operation of the apparatuses.

A further object of the invention is to obtain apparatuses for transferring objects that are equipped with rather reduced overall dimensions.

In a first aspect of the invention, an apparatus is provided for transferring objects, comprising hook means suitable for receiving loop means with which said objects are provided, moving means arranged to move said hook means in an advancing direction and supporting means provided with further hook means shaped in such a way as to interact with said loop means to pick up the objects from hook means and deliver said objects to said supporting means.

Owing to this aspect of the invention, an apparatus can be obtained that is equipped with a high level of efficiency and is such as not to require the presence of an operator to manually place loop means on supporting means.

In the case of plants for the production of sausages, an operator in charge of tying can, at the end of tying, immediately hang the sausage to the hook means by means of the loop means instead of depositing the sausage on usual belt conveyors.

As further hook means of the apparatus according to the invention automatically picks up sausages from the hook means, it is possible, for each processing line, in which a positioning station of the sausages on the supporting means and a tying station of the sausages are positioned one downstream of the other, to reduce by one unit the number of operators, with a consequent significant reduction of production costs.

In one embodiment, the supporting means comprises a first bar and a second bar projecting from a rotating plate of a handling device arranged to transfer the first bar and the second bar between a pickup position of the objects and a delivery position of the objects.

As owing to this invention the presence of an operator is not required to pick up the objects from the hook means and arrange them on the supporting means, the first bar and the second bar can be arranged at a short distance from each other in such a way as to considerably limit the total overall dimensions of the apparatus.

In a second aspect of the invention, a method is provided for transferring objects, comprising associating loop means with said objects, hanging said loop means on hook means and moving said hook means in an advancing direction.

In one embodiment, during said moving picking up the objects from the hook means and positioning them on supporting means are provided for.

Owing to this aspect of the invention it is possible to obtain a method for transferring objects that is rather efficient inasmuch as the same operator can associate the loop means with the object and subsequently hang the latter on hook means.

Furthermore, the objects are picked up by the hook means without the movement of the latter having to be stopped, which enables the downtime to be minimised that is due to transfer operations.

The invention will be better understood and carried out with reference to the attached drawings, which illustrate some exemplifying and not limiting embodiments thereof, in which:
Figure 1 is a schematic side view of an apparatus according to the invention;
Figure 2 is a view like the one in Figure 1 showing a variation of the apparatus according to the invention;
Figure 3 is a schematic detail of Figure 1 showing an object associated with hook means of the apparatus according to the invention;
Figure 4 is a detail like the one in Figure 3 showing the object associated with further hook means of the apparatus according to the invention, after being picked up by the hook means;
Figure 5 is a partially fragmentary schematic front view of the apparatus in Figure 1.
Figure 6 is a detail of Figure 1 showing a handling device of the further hook means and supporting means of the apparatus according to the invention to which further hook means is connected.

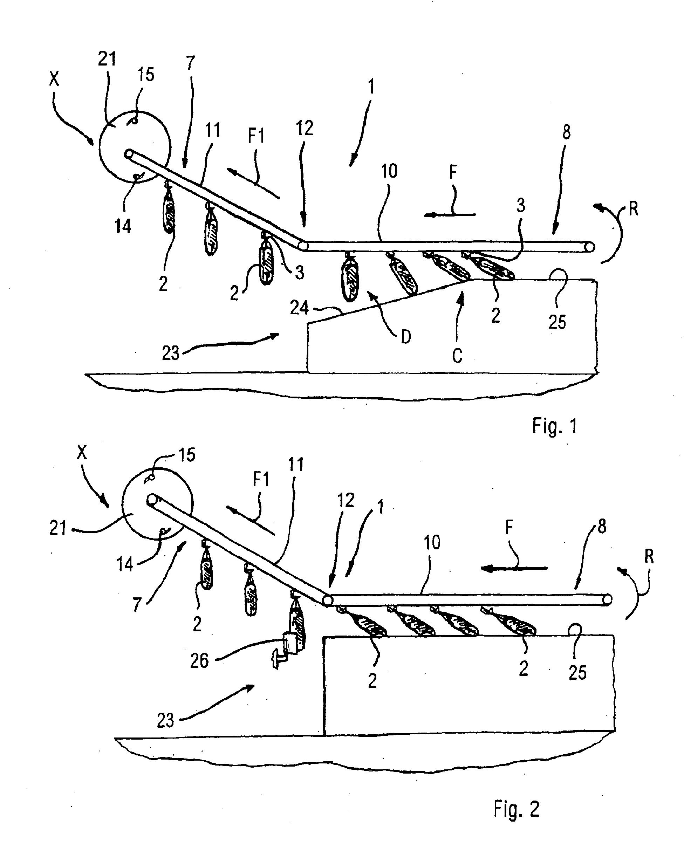

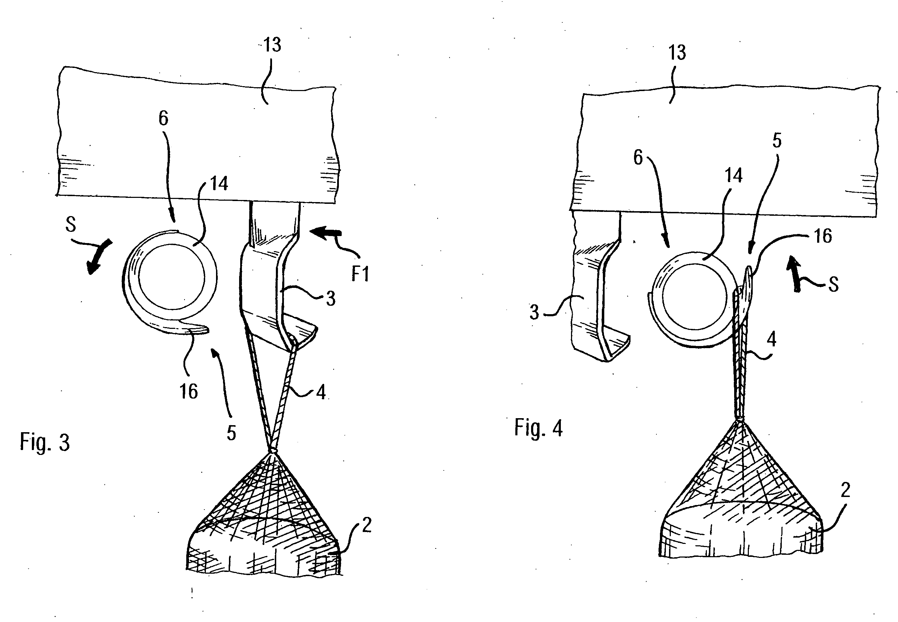

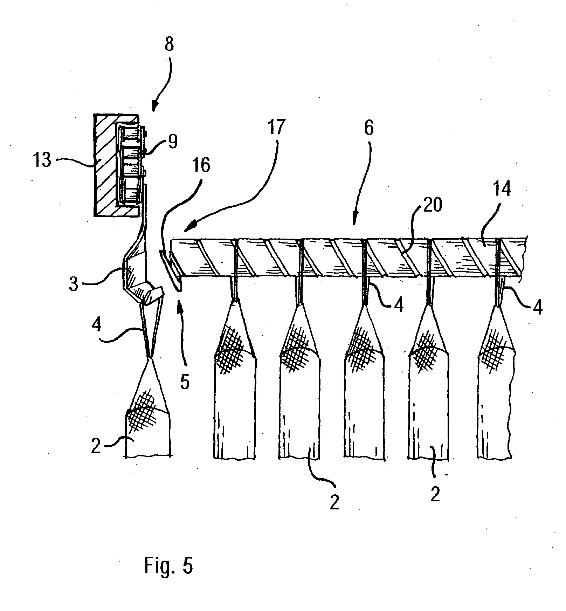

With reference to Figures 1 to 6 an apparatus 1 is shown for the transfer of objects such as sausages, in particular salami 2, comprising a plurality of hooks 3 whereupon the salami 2 are hung by eyelets 4 with which the latter are provided.

The apparatus 1 comprises a pickup station X in which removing means 5 and supporting means 6 are provided that will be disclosed in greater detail below, in which the salami 2 are picked up from the hooks 3 and are positioned on the supporting means 6.

The apparatus 1 is equipped with moving means 7 arranged to move the salami 2 towards the pickup station X.

The moving means 7 comprises a conveyor 8 equipped with a chain 9, sliding inside a respective guide 13, to which the hooks 3 are fixed, this chain 9 being closed in a loop and being actuated to rotate in the direction indicated by the arrow R.

Advantageously, the guide 13 is made of a material having a low attrition coefficient.

The conveyor 8 comprises a first portion 10 suitable for picking up the salami 2 from a tying station, which is not shown, in which operators in charge of tying place the eyelets 4 onto the hook means 2 and make them advance in an advancing direction that is substantially horizontal that is indicated by the arrow F.

The conveyor 8 furthermore comprises a second portion 11 arranged to make the salami 2 advance in a further advancing direction indicated by the arrow F1, in such a way as to transfer the salami 2 from a bottom vertical height at a connection zone 12 of the first portion 10 and of the second portion 11, and a top delivery zone arranged at the pickup station X.

Supporting means 6 comprises a first bar 14 and a second bar 15 that are rotationally actuatable, by means of actuation means that is not shown, around respective longitudinal axes.

The first bar 14 and the second bar 15 are arranged in directions that are transversal with respect to the further advancing direction F1 of the salami 2 along the second portion 11 of the conveyor 8.

The removing means 5 comprises a first appendage, particularly a first curved appendage 16 fixed to a first end 17 of the first bar 14 and a second appendage, particularly a second curved appendage 18, fixed to a further first end 19 of the second bar 15.

The first curved appendage 16 and the second curved appendage 18 are shaped in such a way as to interact with the eyelets 4, whilst the sausages are advanced in the further advancing direction F1 to pick up the salami 2 by removing them from the hooks 3.

This is made possible owing to the combination of the straight advance movement of the hooks 3 achieved by the conveyor 8 and of the rotational movement of the first bar 14 and of the second bar 15 around their own longitudinal axes in the direction indicated by the arrow S, which makes the first curved appendage 16 or respectively the second curved appendage 18 insert itself inside the eyelets 4 to hold the salami 2 on the first bar 14, or on the second bar 15, whilst the hooks 3, wherefrom the salami 2 have now been removed, continue their advance.

A helicoidal groove 20 into which the eyelets 4 are received runs down the length of the first bar 14 and the second bar 15.

The first curved appendage 16 and the second curved appendage 18 respectively partially wrap around the first bar 14 and the second bar 15 at the first end 17 and at the further first end 19 in such a way as to extend parallel to the helicoidal groove 20 to induce the eyelets 4 associated with the salami 2 picked up therefrom by the hooks 3 to be received inside the helicoidal groove 20.

During operation, after a salami 2 has been transferred from the removing means 5 to the first bar 14, or to the second bar 15, it is possible to turn the first bar 14 in the direction indicated by the arrow S or to turn the second bar 15 by a preset number of rotations so as to shift the salami 2 along the first bar 14, or the second bar 15 by a certain distance thanks to the interaction between the eyelet 4 and the helicoidal groove 20.

The operation disclosed herein is repeated at the moment of pickup of each of the salami 2 from the respective hook 3, thus enabling the salami 2 to be spaced by a required distance along the first bar 14 or along the second bar 15.

The first bar 14 and the second bar 15 are provided with a second end and a further second end that are respectively opposite the first end 17 and the further first end 19, which are associated with a circular plate 21 of a transfer device 22 with which the apparatus 1 is equipped.

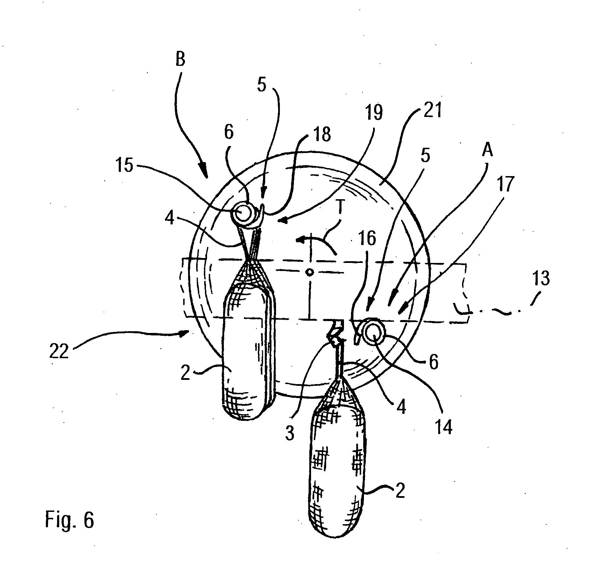

The transfer device 22 comprises motor means that is not shown arranged to rotationally actuate the plate 21 in the direction indicated by the arrow T, in such a way as to move the first bar 14 and the second bar 15 between a loading position, indicated by A in Figure 6, wherein the salami 2 are positioned on the first bar 14, or on the second bar 15, and an unloading position, indicated by B in Figure 6, wherein the salami 2 are transferred from the second bar 15, or from the first bar 14, onto elongated supporting elements suitable for receiving them to facilitate their conveying and/or storage.

Advantageously, the first bar 14 and the second bar 15 comprise a hollow tubular element into which one of the elongated supporting elements can be received.

As disclosed in detail in European Patent Application 99103419.0 disclosed above, the transfer of the salami 2 occurs by progressively extracting the elongated supporting element from the first bar 14, or from the second bar 15, into which it was previously inserted, and simultaneously actuating the first bar 14, or from the second bar 15, to rotate in a direction opposite the one shown by the arrow S.

In this way the salami 2 positioned on the first bar 14, or on the second bar 15, the eyelets 4 of which are inserted inside the helicoidal groove 20, are made to shift towards the first end 17, or towards the further first end 19, until they are unloaded from the first bar 14, or from the second bar 15, and are received on the elongated supporting element.

The first bar 14 and the second bar 15 are positioned on the same diameter of the circular plate 21 at a limited distance from each other, which enables the overall dimensions of the apparatus 1 to be considerably limited.

This is made possible by the fact that removal of the salami 2 from the hooks 3 by the removing means 5 occurs in an automatic manner and it is not therefore necessary to provide a workstation having sufficiently extended dimensions to be able to accommodate an operator.

Alternatively, the apparatus 1 might not comprise the first bar 14 and the second bar 15. In this case, the elongated supporting elements should be provided, at one of their ends, with the removing means 5 and if necessary with the helicoidal groove 20.

In this case, the elongated supporting elements would automatically pick up the salami 2 from the hooks 3 and keep them resting thereupon.

The presence of the first bar 14 and of the second bar 15 is advantageous for the purposes of limiting costs inasmuch as it is not necessary to provide rather a large number of elongated supporting elements that have to be subjected to complex mechanical processing to equip them with the removing means 5 and the helicoidal groove 20.

As shown in Figures 1 and 2, the apparatus 1 is furthermore provided with positioning means 23 arranged to limit the oscillations of the salami 2 when the latter are transferred from the first portion 10 to the second portion 11 of the conveyor 8.

In Figure 1, positioning means 23 is shown comprising a inclined plane 24 descending towards the collection zone 12 of the first portion 10 and of the second portion 11 of the conveyor 8.

In this way, the salami 2 pass from a inclined configuration C, in which they run on a supporting plane 25 below the first portion of the conveyor 8, to a substantially vertical configuration D.

Owing to the presence of the inclined plane 24, the salami 2 pass from the inclined configuration C to the vertical configuration D in an extremely gradual manner, in such a way that they are subject to oscillations of a very small amount as they are no longer supported by the supporting plane 25.

Figure 2 shows a variation of positioning means 23 in which the latter comprises deformable intercepting means 26 arranged to prevent the salami 2 from oscillating by a considerable amount once the supporting plane 25 has been abandoned.

Advantageously, intercepting means 26 is made of deformable material, for example plastic material, and is shaped in such a way as to stop the oscillations of the salami 2, but not to hinder the advance of the latter along the second length 11 of the conveyor 8.

## Claims

1. Apparatus for transferring objects (2), comprising hook means (3) suitable for receiving loop means (4) with which said objects (2) are provided, moving means (7) arranged to move said hook means (3) along an advancing direction (F, F1) and supporting means (6) provided with further hook means (5) shaped in such a way as to interact with said loop means (4) to remove said objects (2) from said hook means (3) and deliver said objects (2) to said supporting means (6).

2. Apparatus according to claim 1, wherein said supporting means (6) is arranged transversally with respect to said advancing direction (F, F1).

3. Apparatus according to claim 1, or 2, and further comprising actuating means arranged to rotationally actuate said supporting means (6) around respective longitudinal axis means.

4. Apparatus according to any one of the previous claims, wherein said moving means (7) comprises flexible driving means (9) with which said hook means (3) is made integral.

5. Apparatus according to claim 4, wherein said flexible driving means comprises chain means (9) closed in a loop and rotationally actuatable by motor means.

6. Apparatus according to any one of the preceding claims, wherein said further hook means (5) comprises appendage means (16, 18) projecting from end means (17, 19) of said supporting means (6).

7. Apparatus according to any one of the preceding claims wherein said supporting means (6) comprises helicoidal groove means (20) arranged to receive said loop means (4).

8. Apparatus according to claim 7 as appended to claim 6, wherein said appendage means (16, 18) partially wrap around said supporting means (6) at said end means (17, 19) in such a way as to run parallel to said helicoidal groove means (20).

9. Apparatus according to any one of the preceding claims, wherein said supporting means (6) comprises elongated supporting elements suitable for receiving said objects (2) to facilitate their handling and/or storage.

10. Apparatus according to any one of claims 1 to 8, wherein said supporting means (6) comprises intermediate supporting means (14, 15) arranged to receive said objects (2) from said further hook means (5) and transfer said objects (2) to elongated supporting elements suitable for facilitating the handling and/or storage of said objects (2).

11. Apparatus according to claim 10, wherein said intermediate supporting means comprises bar means (14, 15) projecting from plate means (21).

12. Apparatus according to claim 11, wherein said bar means comprises a plurality of bars (14, 15).

13. Apparatus according to claim 12, wherein said plurality of bars comprises a first bar (14) and a second bar (15).

14. Apparatus according to claim 13, wherein said first bar (14) and said second bar (15) extend from zones diametrically opposite said plate means (21).

15. Apparatus according to any one of claims 11 to 14, and further comprising guide means arranged to rotate said plate means (21) around an axis substantially parallel to said bar means (14, 15).

16. Apparatus according to claim 15, wherein said plate means (21) moves said bar means (14, 15) between a loading position (A), wherein said bar means (14, 15) receives said objects (2) from said hook means (3), and an unloading position (B), wherein said bar means (14, 15) delivers said objects (2) to said elongated supporting elements.

17. Apparatus according to any one of claims 11 to 16, wherein said bar means (14, 15) comprises an internally hollow tubular body wherein said elongated supporting elements are insertable.

18. Apparatus according to claim 17, and further comprising actuating means arranged to extract said elongated supporting elements from said bar means (14, 15) whilst said bar means (14, 15) is actuated to rotate around respective longitudinal axis means.

19. Apparatus according to any one of the preceding claims, and further comprising positioning means (23) arranged to limit the oscillations of said objects (2) during the shift of said objects (2) along said moving means (7).

20. Apparatus according to any one of the preceding claims, and comprising supporting plane means (25) arranged below said moving means (7) and suitable for supporting the objects (2) associated with said hook means (3).

21. Apparatus according to claim 20, as appended to claim 19, wherein said positioning means (23) comprises inclined plane means (24) arranged downstream of said supporting plane means (25) and descending in a direction facing away from said supporting plane means (25).

22. Apparatus according to claim 19, or according to claim 20 as appended to claim 19, wherein said positioning means (23) comprises deformable intercepting means (26) suitable for stopping the oscillations of said objects (2) without hindering their advance along said moving means (7).

23. Apparatus according to any one of the preceding claims, wherein said objects comprise food products (2).

24. Apparatus according to claim 23, wherein said food products comprise sausages (2).

25. Apparatus according to claim 24, and furthermore comprising, upstream of said moving means (7), a tying station of said sausages (2), wherein said loop means (4) is associated with said sausages (2).

26. Apparatus according to claim 25, and furthermore comprising, upstream of said tying station, a sausage-filling device for the preparation of said sausages (2).

27. Method for transferring objects (2), comprising associating loop means (4) with said objects (2), hanging said loop means (4) onto hook means (3) and moving said hook means (3) in an advancing direction (F, F1).

28. Method according to claim 27, wherein said hanging occurs immediately after said associating.

29. Method according to claim 27, or 28, wherein said associating and said hanging occur at a same processing station of said objects (2).

30. Method according to any one of the claims 27 to 29, wherein during said moving picking up said objects (2) from said hook means (2) and positioning them on supporting means (6) is provided for.

31. Method according to claim 30, wherein said picking up occurs during said moving.

32. Method according to claim 30, or 31, wherein said picking up comprises actuating further hook means (5) associated with said supporting means (6) and shaped in such a way as to interact with said loop means (4) to remove said objects (2) from said hook means (3) and deliver said objects (2) to said supporting means (6).

33. Method according to any one of the claims 27 to 32, wherein said objects comprise food products (2).

34. Method according to claim 33, wherein said food products comprise sausages (2).

35. Method according to claim 34, wherein said associating occurs during the operations of tying said sausages (2).
